# EUROPEAN PATENT SPECIFICATION

(11) **EP 3 027 444 B1**
(45) Date of publication and mention of the grant of the patent: **26.02.2020**
(21) Application number: 14786730.3
(22) Date of filing: 02.08.2014
(51) Int. Cl.: B60J 1/08

(54) **MOBILE ACCOMMODATION**
MOBILE UNTERKUNFT
LOGEMENT MOBILE

(30) Priority: 02.08.2013 NL 2011260
(43) Date of publication of application: 08.06.2016
(73) Proprietor: Polyplastic Groep B.V., 3044 CK Rotterdam (NL)
(72) Inventor: VEENEMAN, Jan Peter, NL-2661 LW Bergschenhoek (NL); VAN DEN HOOVEN, Robin, NL-2806 TD Gouda (NL)
(74) Representative: Jilderda, Anne Ayolt
(86) International application number: PCT/NL2014/050542
(87) International publication number: WO 2015/016717

(56) References cited:
- EP-A1- 0 382 267
- EP-A1- 0 414 302
- GB-A- 1 414 747
- JP-A- 2003 034 148
- JP-U- S62 185 124

## Description

The present invention relates to a mobile accommodation such as a caravan, camper or boat, comprising a cover panel, in particular a window or door, for covering a wall opening in a wall of the mobile accommodation, the cover panel having an at least substantially flat surface on a visible side facing away from the wall. Where reference is made in the present invention to a mobile accommodation, this is understood to mean a vehicle or vessel with the necessary living facilities such as a sleeping area and/or toilet facilities, so that one or more persons can reside therein for a short or longer period of time. The best-known examples hereof are said caravan, camper or boat, although the invention is not limited to these examples.

Known mobile accommodations comprise almost without exception at least a wall opening to provide access to an interior of the vehicle, such as a door opening or window opening. In order to be able to leave such a wall opening clear or on the contrary screen it off, a cover panel for the wall opening is applied which is often also lockable to enable closing of the wall opening as desired. Particularly in the case where this is a window opening, a transparent cover panel is usually applied in known mobile accommodations, such as a glass or plastic window, so that it allows passage of light at all times in order to provide light to an interior of the mobile accommodation and, conversely, a view to the outside of a person in the vehicle is not hereby obstructed. Such a mobile accommodation is known e.g. from GB 1 414 747 A.

A drawback of the known mobile accommodations is that less attractive finishing materials, such as for instance attaching means for attaching the cover panel to the wall of the mobile accommodation, are left unconcealed by the transparent cover panels. This affects the aesthetic value, and often thereby also the economic value, of the mobile accommodation.

The present invention has for its object to obviate the stated drawback.

In order to achieve the intended objective a mobile accommodation of the type stated in the preamble is characterized according to the present invention in that the cover panel comprises on said visible side a recess that comprises a groove in said front wall at the position of said attachment portion, in that said groove runs at least substantially parallel to an outer periphery of the cover panel all along said periphery, in that at least one relatively opaque body is provided in said recess that at least substantially fills said recess, and in that a surface of said at least one opaque body lies at least substantially flush with said flat surface on said visible side of said cover panel.

The cover panel itself can be given a wholly transparent form here as desired, while the relatively opaque body, through a suitable positioning thereof, can be placed in a line of sight in order to conceal from view less attractive finishing materials provided behind it.

In a preferred embodiment according to the present invention the mobile accommodation thus has the feature that the cover panel, in a position lying against the wall, extends with a peripheral part beyond a wall opening edge of the wall opening and is mounted with the peripheral part against an outer side of the wall, and that the body is positioned here in the recess in a direction transversely of the opening opposite the wall opening edge.

As seen from the visible side the body is thus situated in line with the wall opening edge which is present behind it and which is hereby not visible from outside through the cover panel. The overall impression is hereby an attractive one even in the case of a transparent cover panel. Because the cover panel has an at least substantially flat surface here on a visible side, while the opaque body fills the recess and on the visible side lies with its own surface flush with the surface of the cover panel, there is no or hardly any unevenness in the overall surface, whereby the cover panel retains an exceptionally smooth appearance. Furthermore, the cover panel hereby remains streamlined in at least substantially optimal manner on the visible side so that airflows cannot grip thereon, or hardly so, during transport of the mobile accommodation.

According to the present invention the cover panel is double-walled with a cavity space bounded by an at least substantially flat front wall on a visible side and a rear wall on a side facing toward the wall opening, wherein the rear wall is attached with an attaching part against the front wall and wherein the body is provided in the recess in the front wall at the position of the attaching part.

A double-walled cover panel provides great advantages of insulation and is particularly strong and thus durable. An attaching part between the front wall and rear wall is however often easily visible here, either due to a difference in light refraction or due to the presence of adhesive means, such as a suitable type of glue between the front and rear walls. By positioning the opaque body in a line of sight at the position of the attaching part this part is concealed from view and the double-walled cover panel nevertheless presents an attractive appearance.

According to the present invention the body is provided at least substantially parallel to a periphery of the cover panel. Such a parallel arrangement of the body relative to the periphery of the cover panel accentuates the form of the cover panel and imparts a dynamic and stylish overall impression, this often being a desirable characteristic for vehicles and vessels. Furthermore, the recess in which the opaque body is provided, such as a groove, can hereby be arranged relatively easily, for instance by means of a single milling step.

In a particular embodiment the mobile accommodation according to the present invention is characterized in that the body is glued into the recess. Since the integrity of the cover panel has to be guaranteed, glueing of the opaque body against the cover panel represents a practical and reliable solution. Although such glueing per se already brings about a reliable and safe attachment of the opaque body to the cover panel, a clamping force can be applied in addition or instead in order to fix the body in the recess.

In a further particular embodiment according to the present invention the mobile accommodation is thus characterized in that the body is provided clampingly in the recess between opposite edges of the cover panel. This prevents the body coming loose even in the case of exceptionally great forces acting thereon.

Although the body already has added value because it is able to conceal aesthetically unattractive finishing materials, it is recommended that the body itself also creates a favourable impression. In a further preferred embodiment according to the present invention the mobile accommodation is thus characterized in that the body comprises a decorative strip, and particularly that the decorative strip comprises a chrome strip.

The present invention further relates to a cover panel as applied in a mobile accommodation according to the present invention.

The invention will be further elucidated hereinbelow on the basis of a number of exemplary embodiments and an associated drawing. In the drawing:
- figure 1A: shows a front view of a first exemplary embodiment of the cover panel according to the invention for application in a mobile accommodation;
- figure 1B: shows a side view of the first exemplary embodiment of a cover panel according to the invention;
- figure 1C: shows a detail view of the first exemplary embodiment of a cover panel according to the invention;
- figure 2: shows a detail view of a second exemplary embodiment of a cover panel according to the invention; and
- figure 3: shows a detail view of a third exemplary embodiment of a cover panel according to the invention for application in a mobile accommodation.

The figures are otherwise purely schematic and not drawn to scale. Some dimensions in particular may be exaggerated to greater or lesser extent for the sake of clarity.

Corresponding parts are designated as far as possible in the figures with the same reference numeral.

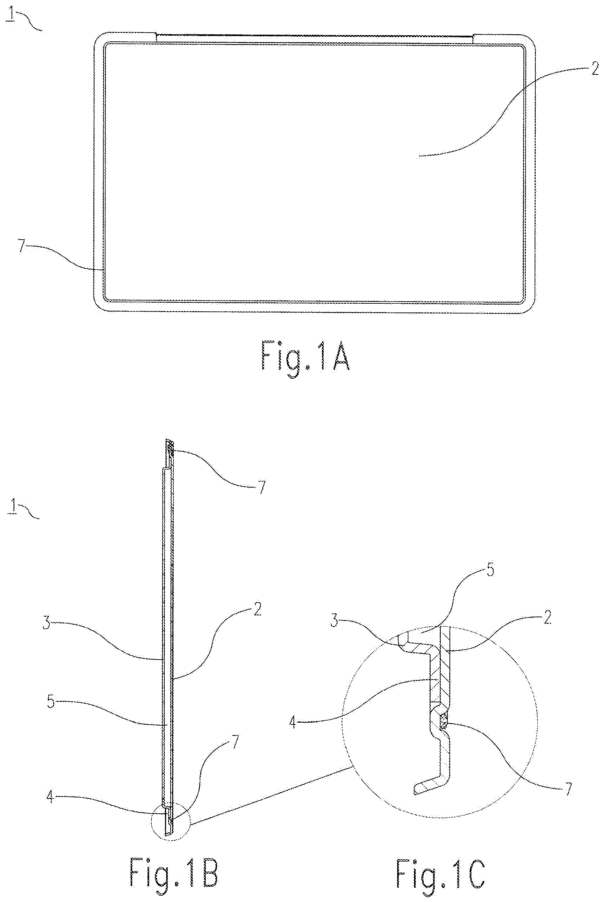

As shown in a first exemplary embodiment in figures 1A to 1C, cover panel 1 comprises a double-walled plastic construction with a relatively flat plastic front wall 2 and a plastic rear wall 3 which is to some extent tray-like and an edge 4 of which is offset relative to a central part thereof. The offset edge forms an attaching part with which the rear wall is attached against the front wall. A cavity space 5 is enclosed here between the front and rear wall. Air present in the cavity space forms an effective insulating layer so that the double-walled construction imparts good insulating properties to the cover panel. Because of its form the relatively flat and smooth front wall can be manufactured easily and at low production cost, while due to its flat surface, particularly on the visible side, it has a high-quality appearance.

In this exemplary embodiment the cover panel is a transparent window which can be applied in a window opening of a mobile accommodation such as a caravan, camper or boat. Instead of a window applied in a window opening, the present invention can also be applied to other types of cover panel for other types of wall opening, such as for instance a door for applying in a door opening of a mobile accommodation.

In this exemplary embodiment the cover panel comprises on an upper side space for attachment of a hinge body with which it can be mounted hingedly on an outer side of a wall of a mobile accommodation. Instead of using the hinge body, the cover panel can alternatively (not shown) also be attached by means of a frame body intended for the purpose which is provided in a wall opening of a mobile accommodation.

On the visible side cover panel 1 has in the plastic front wall a recess 6, in this case a groove running parallel to an outer periphery of the window, in which an opaque body 7 is arranged. In this exemplary embodiment opaque body 7 is a single strip arranged all the way round in the recess, but can alternatively also consist of a plurality of separate or coupled parts provided continuously or spread apart in the recess. Since the body is opaque, a view through the cover panel is prevented at the position of the opaque body. With a suitable placing of the opaque body less attractive finishing materials can thus be concealed from view, and the body itself forms a decorative embellishment of the cover panel. When used in a mobile accommodation, this therefore imparts a desirable high-quality character to the mobile accommodation.

In this exemplary embodiment the opaque body 7 comprises a silver-coloured chrome strip, a surface on the visible side of which lies completely flat, i.e. flush, relative to a surface on the visible side of the plastic front wall. The chrome strip at least largely fills the recess here so that there is substantially no unevenness on the surface of the cover panel on the visible side. The chrome strip is glued with a suitable adhesive into the recess for reliable attachment to the front wall.

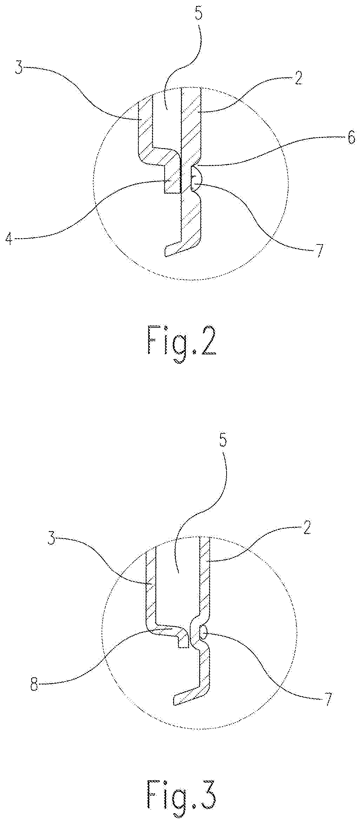

Figure 2 shows a detail view of a second exemplary embodiment of a cover panel according to the present invention. In this exemplary embodiment the recess of front wall 2 is situated with opaque body 7, for instance a silver-coloured chrome strip, in a line of sight in front of edge 4 of rear wall 3 as seen from the visible side. Because the window is manufactured from transparent plastic and thus allows a great measure of view therethrough, attaching means or an adhesive between the front and rear wall of the double-walled cover panel are normally visible, this imparting a less attractive appearance. Because in this exemplary embodiment the opaque body is situated in the most usual line of sight, i.e. a view of the mobile accommodation from outside, in front of edge 4 with which rear wall 3 is attached to front wall 2, an applied attaching means is concealed from view. A decrease in the aesthetic value of the cover panel as a result of a visible attaching means, such as for instance an adhesive, is hereby prevented. The cover panel is further the same as the cover panel as shown in figure 1A and figure IB.

Figure 3 finally shows a detail view of a third exemplary embodiment of a cover panel according to the present invention. In this exemplary embodiment the recess of front wall 2 with opaque body 7, for instance a silver-coloured chrome strip, is situated in a line of sight as seen from the visible side in front of a transverse part 8 connecting the offset edge 4 and central part 3 of rear wall 3. This part, which is usually readily visible due to a difference in refraction of incident light, is thus concealed from view. The cover panel is otherwise the same as the cover panel as shown in figure 1A and figure IB.

Although the invention has been further elucidated with reference to only a few exemplary embodiments, it will be apparent that the invention is by no means limited thereto. On the contrary, many other variations and embodiments are possible within the scope of the invention as defined by the appended claims for the person with ordinary skill in the art.

## Claims

1. Mobile accommodation, such as a caravan, camper or boat, comprising a wall having a wall opening and a cover panel, in particular a window or door, covering said wall opening, wherein the cover panel has an at least substantially flat surface on a visible side facing away from the wall, wherein the cover panel is double-walled with a cavity space (5) that is bounded by an at least substantially flat front wall (2) on said visible side and a rear wall (3) on a side facing toward the wall opening, and wherein said rear wall (3) is attached along an attaching part (4) to said front wall (2), **characterized in that** the cover panel comprises on said visible side a recess that comprises a groove in said front wall at the position of said attaching part, **in that** said groove runs at least substantially parallel to an outer periphery of the cover panel all along said periphery, **in that** at least one relatively opaque body (7) is provided in said recess that at least substantially fills said recess, and **in that** a surface of said at least one opaque body (7) lies at least substantially flush with said flat surface on said visible side of said cover panel.

2. Mobile accommodation as claimed in claim 1, **characterized in that** the cover panel, in a position lying against the wall, extends with a peripheral part beyond a wall opening edge of the wall opening and is mounted with the peripheral part against an outer side of the wall, and that said body (7) is positioned here in the recess in a direction transversely of the opening opposite the wall opening edge.

3. Mobile accommodation as claimed in one or more of the preceding claims, **characterized in that** said body (7) is glued into the recess.

4. Mobile accommodation as claimed in one or more of the preceding claims, **characterized in that** said body (7) is provided clampingly in the recess.

5. Mobile accommodation as claimed in one or more of the preceding claims, **characterized in that** said body (7) comprises a decorative strip.

6. Mobile accommodation as claimed in claim 5, **characterized in that** the decorative strip comprises a chrome strip.

7. Cover panel as applied in a mobile accommodation as claimed in one or more of the preceding claims.

## Patentansprüche

1. Fahrbare Unterkunft wie ein Caravan, ein Campingfahrzeug oder ein Boot, umfassend eine Wand mit einer Wandöffnung und einer Abdeckplatte, insbesondere ein Fenster oder eine Tür, die die Wandöffnung abdeckt; die Abdeckplatte weist eine im Wesentlichen ebene Fläche auf einer Sichtseite auf, von der Wand abgewandt; die Abdeckplatte ist doppelwandig mit einem Hohlraum (5), der begrenzt ist von einer wenigstens im Wesentlichen ebenen Frontwand (2) auf der Sichtseite und einer Rückwand (3) auf einer der Wandöffnung zugewandten Seite; die Rückwand (3) ist entlang einem Befestigungsteil (4) an die Frontwand (2) angeschlossen, **dadurch gekennzeichnet, dass** die Abdeckplatte auf der Sichtseite eine Aussparung umfasst, die eine Nut in der Frontwand in der Position des Befestigungsteils aufweist, dass die Nut wenigstens im Wesentlichen parallel zu einem Außenumfang der Abdeckplatte um den ganzen Umfang herumläuft, dass wenigstens ein relativ opaker Körper (7) in der Aussparung vorgesehen ist und die Aussparung wenigstens im Wesentlichen ausfüllt, und dass eine Fläche des opaken Körpers (7) wenigstens im Wesentlichen bündig zur Fläche auf der Sichtseite der Abdeckplatte verläuft.

2. Fahrbare Unterkunft gemäß Anspruch 1, **dadurch gekennzeichnet, dass** die Abdeckplatte in einer an der Wand anliegenden Position mit einem Umfangsteil über eine Kante der Wandöffnung hinausragt und mit dem Umfangsteil an der Außenseite der Wand montiert ist, und das der Körper (7) in die Aussparung eingeklebt ist.

3. Fahrbare Unterkunft gemäß einem oder mehreren der vorausgegangenen Ansprüche, **dadurch gekennzeichnet, dass** der Körper (7) in die Aussparung eingeklebt ist.

4. Fahrbare Unterkunft gemäß einem oder mehrerer der vorausgegangenen Ansprüche, **dadurch gekennzeichnet, dass** der Körper in die Aussparung einklemmt ist.

5. Fahrbare Unterkunft gemäß einem oder mehreren der vorausgegangen Ansprüche, **dadurch gekennzeichnet, dass** der Körper einen dekorativen Streifen aufweist.

6. Fahrbare Unterkunft gemäß Anspruch 5, **dadurch gekennzeichnet, dass** der dekorative Streifen ein Chromstreifen ist.

7. Abdeckplatte angewandt bei einer fahrbaren Unterkunft gemäß einem oder mehreren der vorausgegangenen Ansprüche.

## Revendications

1. Logement mobile, telle une caravane, un camping-car ou un bateau, comprenant une paroi pourvue d'une ouverture et un panneau protecteur, en particulier une fenêtre ou une porte, couvrant ladite ouverture dans la paroi, le panneau protecteur possédant une surface au moins substantiellement plane sur un côté visible dos à la paroi, le panneau protecteur possédant une double paroi avec un espace formant une cavité (5) qui est fermée par une paroi avant (2) au moins substantiellement plane sur ledit côté visible et une paroi arrière (3) sur un côté faisant face à l'ouverture dans la paroi, et ladite paroi arrière (3) étant fixée le long d'une pièce de fixation (4) à ladite paroi avant (2), **se caractérisant en ce que** le panneau protecteur comprend sur ledit côté visible une cavité qui comprend une rainure dans ladite paroi avant au niveau de ladite pièce de fixation, **en ce que** ladite rainure longe au moins substantiellement parallèlement une bordure extérieure du panneau protecteur tout le long de ladite bordure, **en ce que** au moins un élément relativement opaque (7) est prévu dans ladite cavité qui remplit au moins substantiellement ladite cavité, et **en ce qu'**une surface dudit élément opaque (7) est substantiellement ajustée à ladite surface plane sur ladite paroi visible dudit panneau protecteur.

2. Logement mobile selon la revendication 1, **se caractérisant en ce que** le panneau protecteur, lorsqu'il repose contre la paroi, s'étend avec une partie périphérique au-delà d'un rebord de l'ouverture dans la paroi et est monté avec la partie périphérique contre un côté extérieur de la paroi, et **en ce que** ledit élément (7) est positionnés dans la cavité dans une direction transversale par rapport à l'ouverture opposée au rebord de l'ouverture dans la paroi.

3. Logement mobile selon une ou plusieurs des revendications précédentes, **se caractérisant en ce que** ledit élément (7) est collé dans la cavité.

4. Logement mobile selon une ou plusieurs des revendications précédentes, **se caractérisant en ce que** ledit élément (7) est fermement fixé dans la cavité.

5. Logement mobile selon une ou plusieurs des revendications précédentes, **se caractérisant en ce que** ledit élément (7) comprend une bande décorative.

6. Logement mobile selon la revendication 5, **se caractérisant en ce que** la bande décorative comprend une bande chromée.

7. Panneau protecteur tel qu'appliqué dans un logement mobile selon une ou plusieurs des revendications précédentes.
